Europäisches Patentamt

(19) European Patent Office

Office européen des brevets

(11) Publication number : **0 091 245 B2**

(12) **NEW EUROPEAN PATENT SPECIFICATION**

(45) Date of publication of the new patent specification : 02.05.91 Bulletin 91/18

(51) Int. Cl.⁵ : **G05B 19/40**

(21) Application number : 83301681.9

(22) Date of filing : 25.03.83

(54) **Method and apparatus for controlling feed speed in numerical control system.**

The file contains technical information submitted after the application was filed and not included in this specification

(30) Priority : 29.03.82 JP 50306/82

(43) Date of publication of application :
**12.10.83 Bulletin 83/41**

(45) Publication of the grant of the patent :
**11.03.87 Bulletin 87/11**

(45) Mention of the opposition decision :
**02.05.91 Bulletin 91/18**

(84) Designated Contracting States :
**DE FR GB**

(56) References cited :
**EP-A- 0 024 947
FR-A- 2 244 295
US-A- 3 557 350
US-A- 3 611 102
US-A- 4 027 222**

(56) References cited :
**Magazine "Wt-Z. ind. Fertig", 68 (1978), pages
335-342.
Magazine "Industrie", 100(22.1278),
Nr.102,p.25.
User's manual for "NC-Drehmaschine MD5S
mit ELTROPILOT M".**

(73) Proprietor : **FANUC LTD.
3580, Shibokusa Aza-Komanba, Oshino-mura
Minamitsuru-gun, Yamanashi 401-05 (JP)**

(72) Inventor : **Nozawa, Ryoichiro
12-1-2105, Sarugaku-cho
Shibuya-ku Tokyo (JP)**
Inventor : **Kiya, Nobuyuki
Yokokawacho-Jutaku 13-106, 108
Yokokawa-cho, Hachioji-shi Tokyo (JP)**
Inventor : **Murakami, Kunihiko
Hinohirayamadai-Jutaku 1008
6-7-8, Asahigaoka, Hino-shi Tokyo (JP)**

(74) Representative : **Billington, Lawrence Emlyn et
al
HASELTINE LAKE & CO Hazlitt House 28
Southampton Buildings Chancery Lane
London WC2A 1AT (GB)**

EP 0 091 245 B2

## Description

This invention relates to a method and apparatus for controlling feed speed in a numerical control system which numerically controls the movement of a machine when the system is in use.

Numerical control systems are widely employed for numerically controlling the actions and movements of various machines, for example machine tools. A numerical control system performs such control by supplying the servo system of the machine with feed pulses based on a commanded feed speed. Such a numerical control system has a feed speed override function for increasing or decreasing the commanded feed speed in accordance with a separately entered ratio, referred to as an override quantity. The feed speed override function makes it possible to change a commanded feed speed, which has already been programmed into the system, or a jog feed speed given by a parameter, into an optimum feed speed when desired.

According to the prior art, the feed speed override function is realized by providing an operator's panel, located on the machine side, with override quantity setting means that are utilized to change the override quantity in analog or digital fashion. This is a disadvantage, however, since such an arrangement requires the provision of special switches to serve as the override setting means, as well as numerous specially provided signal lines to carry the associated signals. The number of such lines becomes particularly large when the arrangement is such as to enable fine setting of the override quantity.

EP-A-0 024 947 discloses a method of manually modifying a non-manual commanded feed speed of a numerically controlled machine by means of operating up or down push buttons. This method is very crude and enables no accurate variation of the feed speed to be carried out.

US-A-3 557 350 relates to a similar method and discloses the modification of speed in both automatic run mode and also jog feed mode.

An embodiment of the present invention may provide a method and apparatus for controlling feed speed in a numerical control system, wherein an override quantity needed to change the pulse range of feed pulses can be set without the provision of special switches and signal lines.

An embodiment of the present invention may provide a method and apparatus for controlling feed speed in a numerical control system, wherein an override quantity can be finely set.

An embodiment of the present invention may provide a method and apparatus for controlling feed speed in a numerical control system, wherein an override quantity can be set with facility.

An embodiment of the present invention may provide a method and apparatus for controlling feed speed in a numerical control system, wherein an override quantity can be set by utilizing a manually operated pulse generator provided for feeding a machine by a manual operation.

An embodiment of the present invention may provide a method and apparatus for controlling feed speed in a numerical control system, wherein pulses from a manually operated pulse generator can be utilized in setting an override quantity in a mode designated by a mode selection switch.

Other features and advantages of an embodiment of the present invention will be apparent from the following description taken in conjunction with the accompanying drawings, in which like reference characters designate the same or similar parts throughout the figures thereof.

Brief Description of the Drawings

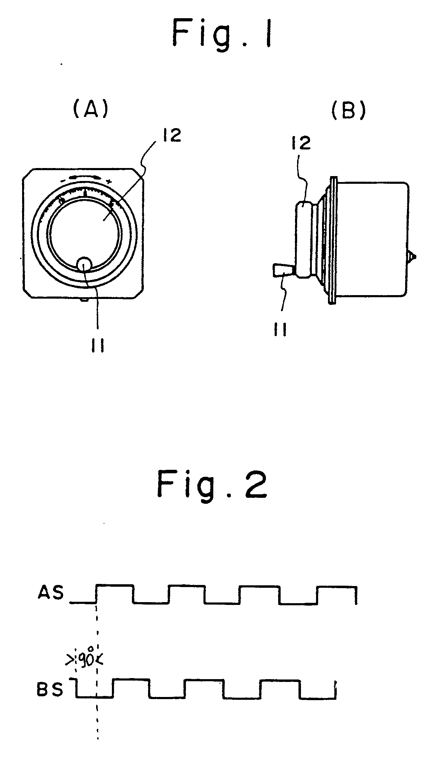

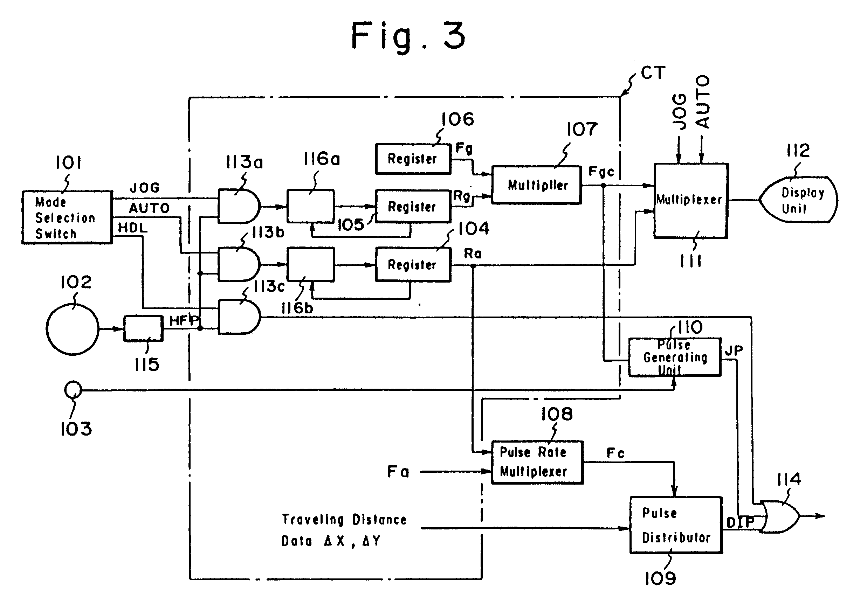

Figs. 1A and 1B are front and side views, respectively, of a manually operated pulse generator used in an embodiment of the present invention ; Fig. 2 is a waveform diagram showing the outputs of the pulse generator illustrated in Fig. 1 ; and Fig. 3 is a block diagram of an arrangement embodying the present invention.

A numerical control system ordinarily is adapted to permit manual transport of a movable machine element, such as the table or tool of a machine tool. For this purpose, the numerical control system is equipped with a manually operated pulse generator in addition to a jog button. Fig. 1 shows the external appearance of the manually operated pulse generator, in which Fig. 1 A is a front view and Fig. 1B a side view. The pulse generator has a handle 11 and a rotating portion 12 to which the handle 11 is attached. When the rotational portion 12 is turned by means of the handle 11, the pulse generator produces an A-phase signal AS and a B-phase signal BS the phases of which are displaced from each other by 90 degrees. The number of pulses in each signal is proportional to the rotational angle of the handle 11, and the pulse rate is proportional to the speed at which the handle is turned. Turning the handle 11 in the forward or clockwise direction causes the phase of the signal AS to lead that of the signal BS, while turning the handle in the reverse or counter-clockwise direction causes the phase of the signal BS to lead. In accordance with a feature of the present embodiment of the invention, the manually operated pulse generator shown in Fig. 1 is used to set an override quantity in a manner described hereinafter.

Reference will now be had to the block diagram of Fig. 3 to describe a feed rate control apparatus embodying the present invention.

The apparatus includes a mode selection switch 101 of push-button type for selecting the mode of a numerical control system. Such modes include an automatic run mode AUTO, a jog feed /mode JOG and a manual pulse distribution mode HDL, the particular mode being activated when the respective output terminal of the mode selection switch 101 is sent to logical "1". A manually operated pulse generator 102 having the construction shown in Fig. 1 is provided for generating the signals described in conjunction with Fig. 2. Numeral 103 denotes a jog feed button for designating jog feed. A register 104 is adapted to register an override quantity Ra (%) when the automatic run mode prevails, and a register 105 is adapted to register a jog override quantity Rg (%) when the jog feed mode is in effect. Both of these registers are preset to a value of 100. A register 106 is provided for storing a jog feed speed Fg which serves as the effective jog feed speed for as long as Rg remains at 100 in the jog feed mode. This will be described in further detail later. A multiplier 107 takes the product of the jog override quantity Rg from the register 105 and the jog feed speed Fg from the register 106, producing a signal Fgc indicative of the result (i.e., Fgc = Fg × Rg). Thus the output Fgc of the multiplier 107 represents the jog feed speed Fg modified by the override value Rg (%) stored in register 105. A known pulse rate multiplexer 108 takes the product of the override quantity Ra (%) from register 104 and a commanded feed speed Fa, obtained from an arithmetic unit that is not shown, for producing pulses having a pulse rate Fc ( = Ra × Fa). Thus the output of the pulse rate multiplexer 108 represents the commanded feed speed Fa modified by the override value Ra (%) stored in register 104. The output of the multiplexer 108 is applied to a known pulse distributor 109 for producing distributed pulses DIP by performing an arithmetic pulse distribution operation based on the multiplexer output and on input data ΔX, ΔY, indicative of amount of movement along X and Y axes, respectively. A pulse generator unit 110, comprising a known digital differential analyzer, is adapted to generate a pulsed signal JP having a pulse rate proportional to the magnitude of the output Fgc from the multiplier 107. The pulses JP are generated only when the jog button 103 is held depressed. A multiplexer 111 having its output connected to a display unit 112 is responsive to the selected mode (JOG or AUTO, whichever is logical "1") to deliver either the jog feed speed Fgc, namely the output of multiplier 107, or the override quantity Ra (%) from the register 104, the display unit 112 responding by displaying Fgc or Ra (%). AND gates 113a, 113b, 113ceach have a first input terminal connected to the JOG, AUTO and HDL outputs of the mode switch 101, respectively. The output of the AND gate 113c is connected to a three-input OR gate 114 whose two remaining inputs are the pulsed signal JP from the pulse generating unit 110 and the distributed pulse signal DIP from the pulse distributor 109. The output of the OR gate 114 is connected to the servo unit of a machine, not shown. An encoding circuit 115 receives the pulses generated by the manual pulse generator 102 and delivers the pulses upon attaching a sign conforming to the direction in which the handle 11 (Fig. 1) is turned. The pulses delivered by the encoding circuit 115, referred to as handle feed pulses HFP, are applied to the second input terminal of each of the AND gates 113a, 113b, 113c. Counting circuits 116a and 116b, receiving the outputs of AND gates 113a, 113b and of registers 105, 104, respectively, are adapted to either subtract the number of pulses from the corresponding AND gate, or add this number to, the contents of the corresponding register, depending upon the direction of rotation of handle 11. The registers 104 through 106, multiplier 107, AND gates 113a through 113c and counting circuits 116a, 116b comprise a control circuit CT.

In the operation of the apparatus illustrated in Fig. 3, AND gate 113c is opened when the manual pulse generation mode is selected (HDL = logical "1") by the mode selection switch 101. When the handle 11 of the manually operated pulse generator 102 is turned under this condition, the encoding circuit 115 delivers the handle feed pulses HFP having a sign in accordance with the direction of handle rotation. The number of pulses produced is a function of the amount of handle rotation. The handle feed pulses HFP are applied to the machine servo unit (not shown) through the open AND gate 113c and the OR gate 114, thereby transporting the table or tool of the machine.

The foregoing function performed by the manually operated pulse generator 102 is the originally intended function, whereby the tool or table is transported in accordance with the operation of the handle 11 of the pulse generator.

Now assume that the automatic run mode (AUTO = logical "1") is selected by the mode selection switch 101 to open the AND gate 113b. [As mentioned above, the register 104 is preset to an initial value of 100 as an override quantity Ra (i.e., override quantity Ra = 100%)]. As long as the manually operated pulse generator 102 is inactive, therefore, the pulse rate multiplexer 108 delivers pulses Fc indicative of the commanded feed speed Fa (Fc = Fa × 1.0). These pulses are applied to the pulse distributor 109 which responds by generating distributed pulses DIP commensurate with the commanded feed speed Fa. These pulses are applied as feed pulses to the machine servo unit through the OR gate 114 and cause the servo unit to drive the machine element. When the handle 11 of the manually operated pulse generator 102 is turned in the automatic run mode, the handle drive pulses HFP, of positive or negative sign depending upon the direction of handle rotation, are fed from the encoding circuit 115 to the counting circuit 116b via the open AND gate 113b. The counting circuit 116b proceeds to count up or count down the contents of the register 104 depending upon the sign of the pulses HFP. By way of example, assume that the handle of the manually operated pulse generator 102 is rotated one-quarter turn in the reverse direction, where a full turn is equivalent to 100 pulses. This will cause the encoding circuit 115 to deliver 25 of the handle drive pulses HFP, indicative of the negative direction, so that the contents of register 104 will be counted down to a value of 75 ( = 100 – 25). Thus the override quantity Ra is changed from 100% to 75%. The result is that the pulse rate multiplexer 108 generates a pulse train indicative of a feed speed Fc which is 75% of the commanded feed speed Fa (i.e., Fc = Fa × 0.75). The pulse distributor 109 responds by generating distributed pulses DIP commensurate with the pulse rate Fc ( = Fa × 0.75). Meanwhile, since the automatic run mode has been selected by the "1" logic and its AUTO input terminal, the multiplexer 111 delivers the override quantity Ra (%) to the display unit 112 where Ra is displayed. This simplifies the override adjustment by permitting the operator to observe the override value while turning the handle of the manual pulse generator 102.

Next, assume that the operator sets the mode selection switch 101 to the jog feed mode (JOG = logical "1") to open the AND gate 113a. [As mentioned above, the register 105 is preset to an initial value of 100 as an override quantity Rg (i.e., override quantity Rg = 100%). Also, the register 106 stores a jog feed speed Fg that will be delivered as the effective jog speed as long as Rg = 100% holds in the present mode]. Thus, when the jog feed button 103 is held depressed without first turning the manually operated pulse generator 102, the pulse generating unit 110 generates pulses JP indicative of the jog feed speed Fgc ( = Fg × 1.00) produced by the multiplier 107. The pulses JP are applied as feed pulses to the machine servo unit through the OR gate 114, the machine element being driven in response thereto. When the handle 11 of the manually operated pulse generator 102 is turned in the jog feed mode, the handle drive pulses HFP, of positive or negative sign depending upon the direction of handle rotation, are fed from the encoding circuit 115 to the counting circuit 116a via the open AND gate 113a. The counting circuit 116a proceeds to count up or count down the contents of the register 105 depending upon the sign of the pulses HFP. For example, if the handle of the manually operated pulse generator 102 is rotated one-fifth turn in the reverse direction, then the encoding circuit 115 will deliver 20 of the handle drive pulses HFP, indicative of the negative direction, causing the contents of register 105 to be counted down to a value of 80 ( = 100 – 20). Thus the override quantity Rg is changed from 100% to 80%. The result is that the product delivered by the multiplier 107 is given by Fg × 0.80, so that the pulse generating unit 110 now produces pulses JP indicative of a feed speed expressed by Fg × 0.80. Owing to selection of the jog feed mode by the "1" logic at its JOG terminal terminal, the multiplexer 111 delivers the jog feed speed Fgc ( = Fg × 0.80) to the display unit 112 where Fgc is displayed. Thus, as mentioned above, adjustment of override is facilitated by permitting the operator to observe the jog feed speed while turning the handle of the manual pulse generator 102.

Note that the override quantity Ra (%) in the automatic run mode can be changed only when the handle feed pulses HFP are generated by operating the manual pulse generator 102 in said mode. Likewise, the override quantity Rg (%) in the jog feed mode can be changed only when the handle feed pulses HFP are generated by operating the manual pulse generator 102 in said mode. These override quantities Ra, Rg are stored in the respective registers 104, 105. The feed speed is overridden on the basis of the override quantity Ra in register 104 when the automatic run mode is selected, and the jog feed speed is overridden on the basis of the override quantity Rg in the register 105 when the jog feed mode is selected.

In the embodiment of the present invention as described and illustrated hereinabove, various switches and signal lines specially provided in the prior art apparatus for setting override quantities may be eliminated, thereby providing a numerical control system which is low in cost and simple to operate. Also, the override quantity and jog feed speed are displayed to simplify their adjustment.

As many apparently widely different embodiments of the present invention can be made without departing from the scope thereof, it is to be understood that the invention is not limited to the specific embodiments thereof except as defined in the appended claims.

In general terms, there has been disclosed a method and apparatus for controlling the feed speed of a machine by a numerical control system having a manual pulse generator (102) for generating pulses (HFP) in response to a manual operation, wherein the numerical control system numerically controls the machine by supplying the machine with the generated pulses (HFP) as feed pulses in a manual mode (HDL), and with feed pulses corresponding to a commanded feed speed (Fg or Fa) in modes (JOG or AUTO) other than the manual feed mode (HDL), the commanded feed speed (Fg or Fa) being modified in accordance with a register (104 or 105). The method includes selectively designating the modes (JOG or AUTO) other than the manual feed mode (HDL), changing the override quantity (Rg or Ra), which is stored in the register (104, 105), based on the pulses (HFP) generated by the manual pulse generator (102) and in accordance with the designated mode (JOG or AUTO), and modifying the commanded feed speed (Fg or Fa) in accordance with the override quantity (Rg or Ra) stored in the register (104 or 105).

According to the present invention there is provided a method of manually modifying a commanded feed speed of a machine controlled by a numerical control system which, in use, supplies the machine with feed pulses at a rate corresponding to the commanded feed speed in a feed mode other than a manual feed mode, there being provided an automatic feed mode in which the commanded feed speed is determined automatically, and a jog feed mode in which the commanded feed speed is predetermined as a rate of pulses generated by holding down a jog feed button, the method comprising :

selectively designating at least the automatic feed mode independently from the manual feed mode using a mode selection switch, and manually operating a manual pulse generator to modify the feed speed commanded for at least the automatic feed mode by supplying pulses modifying the commanded feed speed, the manual pulse generator being a rotary device which doubles as the manual pulse generator used to operate the machine in the manual feed mode and which generates pulses having a number dependent on the angle of rotation of the manual pulse generator and a generation rate dependent on the speed of rotation of the manual pulse generator ; the method being characterised by :

selectively designating the jog feed mode independently from the other feed modes using said mode selection switch ;

modifying both the commanded feed speed when the designated mode is the automatic feed mode and the jog feed speed when the designated mode is the jog feed mode, by using both a first register to store an override quantity used in the automatic feed mode and a second register to store an override quantity used in the jog feed mode, and changing the override quantity stored in either register dependent on the mode designated by said mode selection switch using changing means, the stored override quantity, and therefore the commanded feed speed, being changed by said changing means in dependence upon the number of pulses produced by the manual pulse generator, and the manual pulse generator varying the stored override quantity in such a manner that the operator modifies the commanded feed speed or jog feed speed by a percentage which is equivalent to the rotary position which he gives to the manual pulse generator ;

operating said mode selection switch to supply a signal to a selected one of first to third outputs of said switch corresponding respectively to jog feed mode, automatic feed mode and manual feed mode, said outputs being connectid to first inputs of respective first to third AND gates ;

generating handle feed pulses in response to pulses from said manual pulse generator using an encoder coupled to the manual pulse generator, and supplying the handle feed pulses to second inputs of said AND gates ;

counting pulses output from the first and second AND gates using first and second counters acting as said changing means and connected to the outputs of the first and second AND gates, respectively ;

modifying the contents of said second and first registers using signals from the first and second counters, respectively ;

storing a commanded jog feed speed using a third register ;

generating a jog speed signal by multiplying outputs from said second and third registers using a multiplier ;

generating pulses of a frequency based on a product of an override quantity stored in said first register and a commanded feed speed signal applied externally, using a pulse rate multiplexer;

generating distributed pulses for the automatic feed mode from said pulses from said pulse rate multiplexer and externally-applied distance data, using a pulse distributor ;

generating, in response to a signal from said jog feed button, a pulsed signal of a pulse rate proportional to the magnitude of said jog feed speed signal from said multiplier, for the jog feed mode using a pulse generating unit arranged to receive said jog feed speed signal from said multiplier ; and

transmitting said distributed pulses for the automatic feed mode, said pulsed signal for the jog feed mode, or an output signal from said third AND gate for the manual feed mode, to a servo unit of the machine controlled by the numerical control system, using an OR gate.

According to the present invention there is also provided an apparatus for use in manually modifying a commanded feed speed of a machine controlled by a numerical control system which, in use, supplies the machine with feed pulses at a rate corresponding to the commanded feed speed in a feed mode other than a manual feed mode, there being provided an automatic feed mode in which the commanded feed speed is determined automatically, and a jog feed mode in which the commanded feed speed is predetermined as a rate of pulses generated by holding down a jog feed button, the apparatus comprising :

a mode selection switch adapted to selectively designate at least the automatic feed mode independently from the manual feed mode, and a manual pulse generator which is manually operable to modify the feed speed commanded for at least the automatic feed mode by supplying pulses modifying the commanded feed speed, the manual pulse generator being a rotary device which doubles as the manual pulse generator used to operate the machine in the manual feed mode and which generates pulses having a number dependent on the angle of rotation of the manual pulse generator and a generation rate dependent on the speed of rotation of the manual pulse generator ;

the apparatus being characterised in that :

said mode selection switch is adapted to selectively designate the jog feed mode independently from the other feed modes ;

the apparatus comprises means for modifying both the commanded feed speed when the designated mode is the automatic feed mode and the jog feed speed when the designated mode is the jog feed mode, including both a first register for storing an override quantity used in the automatic feed mode and a second register for storing an override quantity used in the jog feed mode, and means operable to change the override quantity stored in either register dependent on the mode designated by said mode selection switch, the stored override quantity, and therefore the commanded feed speed, being changed by said changing means in dependence upon the number of pulses produced by the manual pulse generator, and the manual pulse generator varying the stored override quantity in such a manner that the operator modifies the commanded feed speed or jog feed speed by a percentage which is equivalent to the rotary position which he gives to the manual pulse generator ;

said mode selection switch has first to third outputs corresponding respectively to jog feed mode automatic feed mode and manual feed mode and is operable to supply a signal to any one of said outputs corresponding to the designated mode said outputs being connected to first inputs or respective first to third AND gates ;

said manual pulse generator is coupled to an encoder operable to generate handle feed pulses in response to pulses from said manual pulse generator and arranged to supply the handle feed pulses to a second inputs of said AND gates ;

first and second counters acting as said changing means are provided, connected to the outputs of the first and second AND gates, respectively ;

said second and first registers are connected to receive signals from the first and second counters, respectively ;

a third register is provided for storing a commanded jog speed ;

a multiplier is arranged to receive outputs from said second and third registers and to generate from those outputs a jog feed speed signal indicative of their product ;

a pulse rate multiplexer is arranged to receive an override quantity signal from said first register and a commanded feed speed signal applied externally and to generate therefrom pulses of a frequency based on the product of said signals ;

a pulse distributor is arranged to receive said pulses from said pulse rate multiplexer, and externally-applied distance data, and is operable to generate therefrom distributed pulses for the automatic feed mode ;

a pulse generating unit is arranged to receive said jog feed speed signal from said multiplier and is operable in response to a signal from said jog feed button to generate a pulsed signal of a pulse rate proportional to the magnitude of said jog feed speed signal from said multiplier, for the jog feed mode ; and

an OR gate is arranged to transmit said distributed pulses for the automatic feed mode, said pulsed signal for the jog feed mode, or an output signal from said third AND gate for the manual feed mode, to a servo unit of the machine controlled by the numerical control system.

A method and apparatus according to the preamble of the preceding two statements are known from the control system ELTROPILOT M manufactoral by GILDEMEISTER AG of 4800 Bielefeld, FRG.

## Claims

1. A method of manually modifying a commanded feed speed of a machine controlled by a numerical control system which, in use, supplies the machine with feed pulses at a rate corresponding to the commanded feed speed in a feed mode other than a manual feed mode (HDL), there being provided an automatic feed mode (AUTO) in which the commanded feed speed is determined automatically, and a jog feed mode (JOG) in which the commanded feed speed is predetermined as a rate of pulses generated by holding down a jog feed button, the method comprising :

selectively designating at least the automatic feed mode (AUTO) independently from the manual feed mode (HDL) using a mode selection switch (101), and manually operating a manual pulse generator (102) to modify the feed speed commanded for at least the automatic feed mode (AUTO) by supplying pulses (HFP) modifying the commanded feed speed, the manual pulse generator (102) being a rotary device which doubles as the manual pulse generator (102) used to operate the machine in the manual feed mode (HDL) and which generates pulses (HFP) having a number dependent on the angle of rotation of the manual pulse generator and a generation rate dependent on the speed of rotation of the manual pulse generator (102) ;

the method being characterised by :

selectively designating the jog feed mode (JOG) independently from the other feed modes using said mode selection switch (101) ;

modifying both the commanded feed speed when the designated mode is the automatic feed mode (AUTO) and the jog feed speed when the designated mode is the jog feed mode (JOG), by using both a first register (104) to store an override quantity used in the automatic feed mode (AUTO) and a second register (105) to store an override quantity used in the jog feed mode (JOG), and changing the override quantity stored in either register (104 or 105) dependent on the mode designated by said mode selection switch (101) using changing means (116a or 116b), the stored override quantity, and therefore the commanded feed speed, being changed by said changing means (116a or 116b) in dependence upon the number of pulses (HFP) produced by the manual pulse generator (102), and the manual pulse generator (102) varying the stored override quantity in such a manner that the operator modifies the commanded feed speed or jog feed speed by a percentage which is equivalent to the rotary position which he gives to the manual pulse generator ;

operating said mode selection switch (101) to supply a signal to a selected one of first to third outputs of said switch corresponding respectively to jog feed mode (JOG), automatic feed mode (AUTO) and manual feed mode (HDL), said outputs being connected to first inputs of respective first to third AND gates (113a, 113b, 113c) ;

generating handle feed pulses (HFP) in response to pulses from said manual pulse generator (102) using an encoder (115) coupled to the manual pulse generator (102), and supplying the handle feed pulses to second inputs of said AND gates (113a, 113b, 113c) ;

counting pulses output from the first and second AND gates using first and second counters (116a, 116b) acting as said changing means (116a, 116b) and connected to the outputs of the first and second AND (113a, 113b), respectively ;

modifying the contents of said second and first registers (105, 104) using signals from the first and second counters, respectively ;

storing a commanded jog feed speed using a third register (106) ;

generating a jog feed speed signal (Fgc) by multiplying outputs from said second and third registers (105, 106) using a multiplier (107) ;

generating pulses of a frequency (Fc) based on a product of an override quantity (Ra) stored in said first register (104) and a commanded feed speed signal (Fa) applied externally, using a pulse rate multiplexer (108) ;

generating, distributed pulses (DIP) for the automatic feed mode (AUTO) from said pulses (Fc) from said pulse rate multiplexer and externally-

applied distance data ($\Delta X$, $\Delta Y$), using a pulse distributor (109) ;

generating, in response to a signal from said jog feed button (103), a pulsed signal (JP) of a pulse rate proportional to the magnitude of said jog feed speed signal (Fgc) from said multiplier (107), for the jog feed mode (JOG) using a pulse generating unit (110) arranged to receive said jog feed speed signal (Fgc) from said multiplier (107) ; and

transmitting said distributed pulses (DIP) for the automatic feed mode (AUTO), said pulsed signal (JP) for the jog feed mode (JOG), or an output signal from said third AND gate (113c) for the manual feed mode (HDL), to a servo unit of the machine controlled by the numerical control system, using an OR gate (114).

2. A method according to claim 1, wherein the override quantity is normally 100 and the manual pulse generator (102) generates 100 pulses for a complete turn thereof, whereby the override quantity is varied by a percentage equivalent to that fraction of a complete turn which is executed by the manual pulse generator.

3. The method according to claim 1 or 2, further comprising a step of displaying the changed override quantity.

4. The method according to any preceding claim, further comprising a step of displaying the modified commanded feed speed.

5. The method according to any preceding claim, further comprising a step of displaying the changed override quantity when the automatic feed mode (AUTO) is designated, and the modified jog feed speed when the jog feed mode (JOG) is designated.

6. Apparatus for use in manually modifying a commanded feed speed of a machine controlled by a numerical control system which, in use, supplies the machine with feed pulses at a rate corresponding to the commanded feed speed in a feed mode other than a manual feed mode (HDL), there being provided an automatic feed mode (AUTO) in which the commanded feed speed is determined automatically, and a jog feed mode (JOG) in which the commanded feed speed is predetermined as a rate of pulses generated by holding down a jog feed button, the apparatus comprising :

a mode selection switch (101) adapted to selectively designate at least the automatic feed mode (AUTO) independently from the manual feed mode (HDL), and a manual pulse generator (102) which is manually operable to modify the feed speed commanded for at least the automatic feed mode (AUTO) by supplying pulses (HFP) modifying the commanded feed speed, the manual pulse generator (102) being a rotary device which doubles as the manual pulse generator (102) used to operate the machine in the manual feed mode (HDL) and which generates pulses (HFP) having a number dependent on the angle of rotation of the manual pulse generator and a generation rate dependent on the speed of rotation of the manual pulse generator (102) ;
the apparatus being characterised in that :
said mode selection switch (101) is adapted to selectively designate the jog feed mode (JOG) independently from the other feed modes ;
the apparatus comprises means for modifying both the commanded feed speed when the designated mode is the automatic feed mode (AUTO) and the jog feed speed when the designated mode is the jog feed mode (JOG), including both a first register (104) for storing an override quantity used in the automatic feed mode (AUTO) and a second register (105) for storing an override quantity used in the jog feed mode (JOG), and means (116a or 116b) operable to change the override quantity stored in either register (104 or 105) dependent on the mode designated by said mode selection switch (101), the stored override quantity, and therefore the commanded feed speed, being changed by said changing means (116a or 116b) in dependence upon the number of pulses (HFP) produced by the manual pulse generator (102), and the manual pulse generator (102) varying the stored override quantity in such a manner that the operator modifies the commanded feed speed or jog feed speed by a percentage which is equivalent to the rotary position which he gives to the manual pulse generator ;
said mode selection switch (101) has first to third outputs corresponding respectively to jog feed mode (JOG), automatic feed mode (AUTO) and manual feed mode (HDL) and is operable to supply a signal to any one of said outputs corresponding to the designated mode (HDL, AUTO, JOG) said outputs being connected to first inputs of respective first to third AND gates (113a, 113b, 113c) ;
said manual pulse generator (102) is coupled to an encoder (115) operable to generate handle feed pulses (HFP) in response to pulses from said manual pulse generator (102) and arranged to supply the handle feed pulses to second inputs of said AND gates (113a, 113b, 113c) ;
first and second counters (116a, 116b) acting as said changing means (116a, 116b) are provided, connected to the outputs of the first and second AND gates (113a, 113b), respectively ;
said second and first registers (105, 104) are connected to receive signals from the first and second counters, respectively ;
a third register (106) is provided for storing a commanded jog feed speed ;
a multiplier (107) is arranged to receive outputs from said second and third registers (105, 106) and to generate from those outputs a jog feed speed signal (Fgc) indicative of their product ;
a pulse rate multiplexer (108) is arranged to receive an override quantity signal (Ra) from said first register (104) and a commanded feed speed signal (Fa) applied externally and to generate therefrom pulses of a frequency (Fc) based on the product of said signals ;
a pulse distributor (109) is arranged to receive said pulses (Fc) from said pulse rate multiplexer, and externally-applied distance data (ΔX, ΔY), and is operable to generate therefrom distributed pulses (DIP) for the automatic feed mode (AUTO) ;
a pulse generating unit (110) is arranged to receive said jog feed speed signal (Fgc) from said multiplier (107) and is operable in response to a signal from said jog feed button (103) to generate a pulsed signal (JP) of a pulse rate proportional to the magnitude of said jog feed speed signal (Fgc) from said multiplier (107), for the jog feed mode (JOG) ; and
an OR gate (114) is arranged to transmit said distributed pulses (DIP) for the automatic feed mode (AUTO), said pulsed signal (JP) for the jog feed mode (JOG), or an output signal from said third AND gate (113c) for the manual feed mode (HDL), to a servo unit of the machine controlled by the numerical control system.

7. The apparatus according to claim 6, wherein the override quantity is normally 100 and the manual pulse generator (102) generates 100 pulses for a complete turn thereof, whereby the override quantity is varied by a percentage equivalent to that fraction of a complete turn which is executed by the manual pulse generator.

8. The apparatus according to claim 6 or 7, further comprising display means (112) for displaying the changed override quantity when the automatic feed mode (AUTO) is designated and the modified jog feed speed when the jog feed mode (JOG) is designated.

9. The apparatus according to claim 6 or 7, further comprising display means (112) for displaying the changed override quantity.

10. The apparatus according to claim 6, 7 or 9, further comprising display means (112) for displaying the modified commanded feed speed.

11. The apparatus according to claim 8, 9 or 10 further comprising a multiplexer (111), arranged to receive said signal (Fgc) from said multiplexer (107) and said override quantity (Ra) from said first register (104) and operable to deliver either signal to a display unit (112), whereby the jog feed speed (Fgc) or the override quantity (Ra) is displayed on the display unit.

**Ansprüche**

1. Verfahren zum manuellen Modifizieren einer Soll-Vorschubgeschwindigkeit einer Maschine, die durch ein numerisches Steuersystem gesteuert wird, das die Maschine im Betrieb mit Vorschubimpulsen bei einer Impulsrate versorgt, die der Soll – Vorschubgeschwindigkeit in einem Vorschub-Modus entspricht, der kein manueller Vorschub-Modus (HDL) ist, wobei ein automatischer Vorschub-Modus (AUTO), in dem die Soll – Vorschubgeschwindigkeit automatisch bestimmt wird, und ein Schnellvorschub-Modus (JOG), in dem die Soll – Vorschubgeschwindigkeit in Form einer Impulsrate von Impulsen vorbestimmt ist, die durch Niederhalten einer Schnellvorschubtaste erzeugt werden, vorgesehen sind, wobei das Verfahren umfaßt :

ein selektives Bestimmen zumindest des automatischen Vorschub-Modus (AUTO) unabhängig von dem manuellen Vorschub-Modus (HDL) unter Benutzung eines Modus-Auswahlschalters (101) und ein manuelles Betätigen eines manuellen Impulserzeugers (102), um die Vorschubgeschwindigkeit, die für zumindest den automatischen Vorschub-Modus (AUTO) Sollwert ist, zu modifizieren, durch Liefern von Impulsen (HFP), die die Soll – Vorschubgeschwindigkeit modifizieren, wobei der manuelle Impulserzeuger (102) eine Dreheinrichtung ist, die als der manuelle Impulserzeuger (102) fungiert, der benutzt wird, um die Maschine in dem manuellen Vorschub-Modus (HDL) zu betreiben, und der Impulse (HFP) erzeugt, die eine Anzahl, die von dem Drehwinkel des manuellen Impulserzeugers abhängt, und eine Erzeugungsrate, die von der Drehgeschwindigkeit des manuellen Impulserzeugers (102) abhängt, aufweisen,

welches Verfahren **gekennzeichnet** ist durch Schritte zum

selektiven Bestimmen des Schnellvorschub-Modus (JOG) unabhängig von den anderen Vorschub-Modi, durch Benutzvng des Modus-Auswahlschalters (101),

Modifizieren sowohl der Soll – Vorschubgeschwindigkeit, wenn der bestimmte Modus der automatische Vorschub-Modus (AUTO) ist, als auch der Schnellvorschubgeschwindigkeit, wenn der bestimmte Modus der Schnellvorschub-Modus (JOG) ist, durch Benutzen sowohl eines ersten Registers (104), um eine Vorranggröße zu speichern, die ein dem automatischen Vorschub-Modus (AUTO) benutzt wird, als auch eines zweiten Registers (105), um eine Vorranggröße zu speichern, die in dem Schnellvorschub-Modus (JOG) benutzt wird, und Ändern der Vorranggröße, die in einem der Register (104 oder 105) gespeichert ist, abhängig von dem Modus, der durch den Modus-Auswahlschalter (101) bestimmt ist, unter Benutzung eines Änderungsmittels (116a oder 116b), wobei die gespeicherte Vorranggröße und daher die Soll – Vorschubgeschwindigkeit durch das Änderungsmittel (116a oder 116b) in Abhängigkeit von der Anzahl von Impulsen (HFP) geändert wird, die durch den manuellen Impulserzeuger (102) erzeugt werden, und wobei der manuelle Impulserzeuger (102) die gespeicherte Vorranggröße in einer Weise variiert, daß eine Bedienvngsperson die Soll – Vorschubgeschwindikeit oder Schnellvorschubgeschwindigkeit um einen Prozentsatz modifiziert, der äqvivalent zu der Drehposition ist, in die sie den manuellen Impulserzeuger stellt,

Betätigen des Modus-Auswahlschalters (101), um ein Signal an einen ausgewählten von ersten bis dritten Ausgängen des Schalters, die jeweils dem SchnellvorschubModus (JOG), dem automatischen Vorschub-Modus (AUTO) und dem manuellen Vorschub-Modus (HDL) entsprechen, zu legen, wobei die Ausgänge mit ersten Eingängen betreffender erster bis dritter UND-Glieder (113a, 113b, 113c) verbunden sind,

Erzeugen von Kurbel-Vorschub-Impulsen (HFP) in Reaktion auf Impulse aus dem manuellen Impulserzeuger (102) unter Benutzung eines Kodierers (115), der mit dem manuellen Impulserzeuger (102) verbunden ist, und Liefern der Kurbel-Vorschub-Impulse an zweite Eingänge der UNDGlieder (113a, 113b, 113c),

Abzählen der Impulse, die von dem ersten und dem zweiten UND-Glied ausgegeben werden, unter Benutzung eines ersten und eines zweiten Zählers (116a, 116b), die jeweils als das Änderungsmittel (116a, 116b) wirken und mit dem Ausgang des ersten bzw. des zweiten UND-Glieds (113a, 113b) verbunden sind,

Modifizieren der Inhalte des zweiten und des ersten Registers (105, 104) unter Benutzung von Signalen aus dem ersten und dem zweiten Zähler,

Speichern einer Soll – Schnellvorschubgeschwindigkeit unter Benutzung eines dritten Registers (106),

Erzeugen eines Schnellvorschubgeschwindigkeitssignals (Fgc) durch Modifizieren von Ausgangssignalen aus dem zweiten und dem dritten Register (105, 106) unter Benutzung eines Multiplizierers (107),

Erzeugen von Impulsen einer Frequenz (Fc) auf der Grundlage eines Produkts einer Vorranggröße (Ra), die in dem ersten Register (104) gespeichert ist, und eines Soll – Vorschubgeschwindigkeitssignals (Fa), das extern zugeführt ist, unter Benutzung eines ImpulsratenMultiplexers (108),

Erzeugen von verteilten Impulsen (DIP) für den automatischen Vorschub-Modus (AUTO) aus den Impulsen (Fc) aus dem Impulsraten-Multiplexer und extern zugeführten Distanzdaten ($\Delta$X,

ΔY) unter Benutzung eines Impulsverteilers (109),

Erzeugen in Reaktion auf ein Signal aus der Schnellvorschubtaste (103) eines gepulsten Signals (JP) einer Impulsrate, die proportional zu der Größe des Schnellvorschubgeschwindigkeitssignals (Fgc) aus dem Multiplizierer (107) ist, für den Schnellvorschub-Modus (JOG) unter Benutzung einer Impulserzeugungseinheit (110), die vorgesehen ist, um das Schnellvorschubgeschwindigkeitssignal (Fgc) aus dem Multiplizierer (107) zu empfangen, und

Senden der verteilten Impulse (DIP) für den automatischen Vorschub-Modus (AUTO), des gepulsten Signals (JP) für den Schnellvorschub-Modus (JOG) oder eines Ausgangssignals aus dem dritten UND-Glied (113c) für den manuellen Vorschub-Modus (HDL) an eine Servoeinheit der Maschine, die durch das numerische Steuersystem gesteuert wird, unter Benutzung eines ODER-Glieds (114).

2. Verfahren nach Anspruch 1, bei dem die Vorranggröße normalerweise 100 beträgt und der manuelle Impulserzeuger (102) 100 Impulse für eine vollständige Umdrehung desselben erzeugt, wodurch die Vorranggröße um einen Prozentsatz variiert wird, der gleich dem Bruchteil einer vollständigen Umdrehung ist, die durch den manuellen Impulserzeuger ausgeführt wird.

3. Verfahren nach Anspruch 1 oder 2, das ferner einen Schritt zum Anzeigen der geänderten Vorranggröße umfaßt.

4. Verfahren nach einem der vorhergehenden Ansprüche, das ferner einen Schritt zum Anzeigen der modifizierten Soll – Vorschubgeschwindigkeit umfaßt.

5. Verfahren nach einem der vorhergehenden Ansprüche, das ferner einen Schritt zum Anzeigen der geänderten Vorranggröße, wenn der automatische Vorschub-Modus (AUTO) bestimmt ist, und der modifizierten Schnellvorschubgeschwindigkeit, wenn der Schnellvorschub-Modus (JOG) bestimmt ist, umfaßt.

6. Vorrichtung zur Benutzung beim manuellen Modifizieren einer Soll – Vorschubgeschwindigkeit einer Maschine, die durch ein numerisches Steuersystem gesteuert wird, das die Maschine im Betrieb mit Vorschubimpulsen bei einer Impulsrate versorgt, die der Soll – Vorschubgeschwindigkeit in einem Vorschub-Modus entspricht, der kein manueller Vorschub-Modus (HDL) ist, wobei ein automatischer Vorschub-Modus (AUTO), in dem die Soll – Vorschubgeschwindigkeit automatisch bestimmt wird, und ein Schnellvorschub-Modus (JOG), in dem die Soll – Vorschubgeschwindigkeit in Form einer Impulsrate von Impulsen vorbestimmt ist, die durch Niederhalten einer Schnellvorschubtaste erzeugt werden, vorgesehen sind, wobei die Vorrichtung umfaßt :

einen Modus-Auswahlschalter (101), der dazu bestimmt ist, selektiv zumindest den automatischen Vorschub-Modus (AUTO) unabhängig von dem manuellen Vorschub-Modus (HDL) zu bestimmen, und einen manuellen Impulserzeuger (102), der manuell betätigbar ist, um die Vorschubgeschwindigkeit, die für zumindest den automatischen Vorschub-Modus (AUTO) befohlen ist, durch Zuführen von Impulsen (HFP) zu modifizieren, die die Soll – Vorschubgeschwindigkeit modifizieren, wobei der manuelle Impulserzeuger (102) eine Dreheinrichtung ist, die als der manuelle Impulserzeuger (102) fungiert, der benutzt wird, um die Maschine in dem manuellen Vorschub-Modus (HDL) zu betreiben, und der Impulse (HFB) erzeugt, die eine Anzahl, welche von dem Drehwinkel des manuellen Impulserzeugers abhängt, und eine Erzeugungsrate, die von der Drehgeschwindigkeit des manuellen Impulserzeugers (102) abhängt, aufweisen,

welche Vorrichtung dadurch **gekennzeichnet** ist, daß

der Modus-Auswahlschalter (101) dafür vorgesehen ist, den Schnellvorschub-Modus (JOG) unabhängig von den anderen Vorschub-Modi zu bestimmen,

die Vorrichtung Mittel zum Modifizieren sowohl der befohlenen Vorschubgeschwindigkeit, wenn der bestimmte Modus der automatische Vorschub-Modus (AUTO) ist, und die Schnellvorschubgeschwindigkeit, wenn der bestimmte Modus der Schnellvorschub-Modus (JOG) ist, umfaßt, die sowohl ein erstes Register (104) zum Speichern einer Vorranggröße, die in dem automatischen Vorschub-Modus (AUTO) benutzt wird, als auch ein zweites Register (105) zum Speichern einer Vorranggröße, die in dem Schnellvorschub-Modus (JOG) benutzt wird, und ein Mittel (116a oder 116b) enthalten, das betreibbar ist, um die Vorranggröße, die in einem der Register (104 oder 105) gespeichert ist, abhängig von dem Modus zu ändern, der durch den Modus-Auswahlschalter (101) bestimmt ist, wobei die gespeicherte Vorranggröße und daher die Soll – Vorschubgeschwindigkeit durch das Änderungs-Mittel (116a oder 116b) in Abhängigkei von der Anzahl der Impulse (HFP) geändert wird, die durch den manuellen Impulserzeuger (102) erzeugt werden, und wobei der manuelle Impulserzeuger (102) die gespeicherte Vorranggröße in einer derartigen Weise variiert, daß eine Bedienungsperson die Soll – Vorschubgeschwindigkeit oder die Schnellvorschubgeschwindigkeit um einen Prozentsatz modifiziert, der äquivalent zu der Drehposition ist, ein die sie den manuellen Impulserzeuger stellt,

der Modus-Auswahlschalter (101) erste bis dritte Ausgänge hat, die jeweils dem Schnellvorschub-Modus (JOG), dem automatischen Vorschub-Modus (AUTO) und dem manuellen Vorschub-Modus (HDL) entsprechen, und der betätigbar ist, um ein Signal an einen der Ausgänge zu legen, der dem bestimmten Modus (HDL, AUTO, JOG) entspricht, wobei die Ausgänge mit ersten Eingängen betreffender erster bis dritter UND-Glieder (113a, 113b, 113c) verbunden sind,

der manuelle Impulserzeuger (102) mit einem Kodierer (115) verbunden ist, der betreibbar ist, um Kurbel-Vorschub-Impulse (HFP) in Reaktion auf Impulse aus dem manuellen Impulserzeuger (102) zu erzeugen, und vorgesehen ist, um die Kurbel-Vorschub-Impulse an zweite Eingänge der UND-Glieder (113a, 113b, 113c) zu liefern,

ein erster und ein zweiter Zähler (116a, 116b), die als die Änderungs-Mittel (116a, 116b) wirken, vorgesehen sind, welche mit den Ausgängen des ersten und des zweiten UND-Glieds (113a, 113b) verbunden sind,

das zweite und das erste Register (105, 104) angeschlossen sind, um jeweils Signale aus dem ersten und dem zweiten Zähler aufzunehmen,

ein drittes Register (106) zum Speichern einer Soll -Schnellvorschubgeschwindigkeit vorgesehen ist,

ein Multiplizierer (107) vorgesehen ist, um Ausgingssignale aus dem ersten und dem dritten Register (105, 106) zu empfangen und um aus diesen Ausgingssignalen ein Schnellvorschubgeschwindigkeitssignal (Fgc) zu erzeugen, das kennzeichnend für deren Produkt ist,

ein Impulsriten-Multiplexer (108) vorgesehen ist, um ein Signal für eine Vorringgröße (Ra) von dem ersten Register (104) und ein Soll – Vorschubgeschwindigkeitssignal (Fa), das extern zugeführt ist, aufzunehmen und daraus Impulse einer Frequenz (Fc) auf der Grundlage des Produkts der Signale zu erzeugen,

ein Impulsverteiler (109) vorgesehen ist, um diese impulse (Fc) aus dem Impulsraten-Multiplexer und extern zugeführte Distanzdaten (ΔX, ΔY) zu empfingen und betreibbar ist, um daraus verteilte Impulse (DIP) für den automatischen Vorschub-Modus (AUTO) zu erzeugen,

eine Impulserzeugungseinheit (110) vorgesehen ist, um das Schnellvorschubgeschwindigkeitssignal (Fgc) aus dem Multiplizierer (107) zu empfangen, und der in Reaktion auf ein Signal aus der Schnellvorschubtaste (103) betreibbar ist, um ein gepulstes Signal (JP) einer Impulsrate, die proportional zu der Größe des Schnellvorschubgeschwindigkeitssignals (Fgc) aus dem Multiplizierer (107) ist, für den Schnellvorschub-Modus (JOG) zu erzeugen, und

ein ODER-Glied (114) vorgesehen ist, um die verteilten Impulse (DIP) für den automatischen Vorschub-Modus (AUTO), das gepulste Signal (JP) für den Schnellvorschub-Modus (JOG) oder ein Ausgangssignal aus dem dritten UND-Glied (113c) für den manuellen Vorschub-Modus (HDL) zu einer Servoeinheit der Maschine zu übertragen, die durch das numerische Steuersystem gesteuert wird.

7. Vorrichtung nach Anspruch 6, bei der die Vorranggröße normalerweise 100 beträgt und der manuelle Impulserzeuger (102) 100 Impulse für eine vollständige Umdrehung desselben erzeugt, wobei die Vorranggröße um einen Prozentsatz variiert wird, der äquivalent zu demjenigen Bruchteil einer vollständigen Umdrehung ist, der durch den manuellen Impulserzeuger ausgeführt wird.

8. Vorrichtung nach Anspruch 6 oder 7, die ferner ein Anzeigemittel (112) zum Anzeigen der geänderten Vorranggröße, wenn der automatische Vorschub-Modus (AUTO) bestimmt ist, und der modifizierten Schnellvorschubgeschwindigkeit, wenn der Schnellvorschub-Modus (JOG) bestimmt ist, umfaßt.

9. Vorrichtvng nach Anspruch 6 oder 7, die ferner ein Anzeigemittel (112) zum Anzeigen der geänderten Vorranggröße umfaßt.

10. Vorrichtung nach Anspruch 6, 7 oder 9, die ferner ein Anzeigemittel (112) zum Anzeigen der modifizierten Soll – Vorschubgeschwindigkeit umfaßt.

11. Vorrichtung nach Anspruch 8, 9 oder 10, die ferner einen Multiplexer (111) umfaßt, der vorgesehen ist, um das Signal (Fgc) aus dem Multiplexer (107) und die Vorranggröße (Ra) aus dem ersten Register (104) zu empfangen, und betreibbar ist, um eines dieser Signale an das Anzeigemittel (112) zu liefern, wodurch das Schnellvorschubgeschwindigkeitssignal (Fgc) oder die Vorranggröße (Ra) auf dem Bildschirm des Anzeigemittels angezeigt wird.

## Revendications

1. Un procédé pour modifier manuellement une vitesse d'avance commandée d'une machine contrôlée par un système à commande numérique qui, en service, fournit à la machine des impulsions d'avance à une fréquence de répétition correspondant à la vitesse d'avance commandée dans un mode d'avance autre qu'un mode d'avance manuel (HDL), où on prévoit un mode d'avance automatique (AUTO) dans lequel la vitesse d'avance commandée est déterminée de manière automatique, et un mode d'avance par à-coups (JOG) dans lequel la vitesse d'avance commandée est déterminée à l'avance sous la forme d'une fréquence de répétition d'impulsions formés en maintenant vers le bas un bouton d'avance par à-coups, le procédé comprenant les opérations consistant à :

désigner de manière sélective au moins le mode d'avance automatique (AUTO) de manière indépendante du mode d'avance manuel (HDL) en utilisant un commutateur de sélection de mode (101), et actionner manuellement un générateur d'impulsions manuel (102) pour modifier la vitesse d'avance commandée pendant au moins le mode d'avance automatique (AUTO) en fournissant des impulsions (HFP) modifiant la vitesse d'avance commandée, le générateur d'impulsions manuel (102) étant un dispositif rotatif qui double le générateur d'impulsions manuel (102) utilisé pour actionner la machine dans le mode d'avance manuel (HDL) et qui forme des impulsions (HFP) dont le nombre dépend de l'angle de rotation du générateur d'impulsions manuel et d'une fréquence de répétition de formation dépendant de la vitesse de rotation du générateur d'impulsions manuel (102) ;

le procédé étant caractérisé par le fait de

désigner de manière sélective le mode d'avance par à-coups (JOG) indépendamment des autres modes d'avance en utilisant ledit commutateur de sélection de mode (101) ;

modifier à la fois la vitesse d'avance commandée lorsque le mode désigné est le mode d'avance automatique (AUTO) et la vitesse d'avance par à-coups lorsque le mode désigné est le mode d'avance par à-coups (JOG), en utilisant à la fois un premier registre (104) pour mémoriser un facteur de modulation utilisé dans le mode d'avance automatique (AUTO) et un second registre (105) pour mémoriser un facteur de modulation utilisé dans le mode d'avance par à-coups (JOG), et changer le facteur de modulation mémorisé dans l'un ou l'autre registre (104 ou 105) selon le mode désigné par ledit commutateur de sélection de mode (101) en utilisant des moyens de changement (116a ou 116b), le facteur de modulation ainsi mémorisé et, par conséquent, la vitesse d'avance commandée étant modifiés par lesdits moyens de changement (116a ou 116b) en fonction du nombre des impulsions (HFP) produites par le générateur d'impulsions manuel (102), et le générateur d'impulsions manuel (102) faisant varier le facteur de modulation ainsi mémorisé de telle manière que l'opérateur modifie la vitesse d'avance commandée ou la vitesse d'avance par à-coups d'un pourcentape qui est équivalent à la position de rotation qu'il donne au générateur d'impulsions manuel ;

actionner ledit commutateur de sélection de mode (101) pour fournir un signal à une sortie sélectionnée parmi les première à troisième sorties dudit commutateur correspondant respectivement au mode d'avance par à-coups (JOG), au mode d'avance automatique (AUTO) et au mode d'avance manuel (HDL), lesdites sorties étant reliées aux premières entrées de première à troisième portes ET respectives (113a, 113b, 113c);

former des impulsions d'avance de manipulation (HFP) en réponse à des impulsions provenant dudit générateur d'impulsions manuel (102) en utilisant un circuit de codage (115) couplé au générateur d'impulsions manuel (102) et en appliquant les impulsions d'avance de manipulation aux secondes entrées desdites portes ET (113a, 113b, 113c) ;

compter les impulsions sortant des première et seconde portes ET en utilisant de premier et second compteurs (116a, 116b) agissant pour lesdits moyens de changement (116a, 116b) et reliés aux sorties des première et seconde portes ET (113a, 113b), respectivement ;

modifier le contenu desdits second et premier registres (105, 104) en utilisant des signaux provenant respectivement des premier et second compteurs ;

mémoriser une vitesse d'avance par à-coups commandée en utilisant un troisième registre (106) ;

former un signal de vitesse d'avance par à-coups (Fgc) en multipliant les sorties desdits second et troisième registres (105, 106) en utilisant un multiplicateur (107) ;

former des impulsions d'une fréquence (Fc) basée sur le produit d'un facteur de modulation (Ra) mémorisé dans ledit premier registre (104) et un signal de vitesse d'avance commandée (Fa) appliqué extérieurement, en utilisant un multiplexeur de fréquence de répétition d'impulsions (108) ;

former des impulsions réparties (DIP) pour le mode d'avance automatique (AUTO) à partir desdites impulsions (Fc) provenant dudit multiplexeur de fréquence de répétition d'impulsions et de données de distance appliquées extérieurement ($\Delta$X, $\Delta$Y), en utilisant un répartiteur d'impulsions (109) ;

former, en réponse à un signal provenant dudit bouton d'avance par à-coups (103), un signal pulse (JP) d'une fréquence de répétition d'impulsions proportionnelle à la grandeur dudit signal de vitesse d'avance par à-coups (Fgc) provenant dudit multiplicateur (107), pour le mode d'avance par à-coups (JOG) en utilisant une unité de génération d'impulsions (110) prévue pour recevoir ledit signal de vitesse d'avance (Fgc) depuis ledit multiplicateur (107) ; et

transmettre lesdites impulsions réparties (DIP) pour le mode d'avance automatique (AUTO), ledit signal pulsé (JP) pour le mode d'avance par à-coups (JOG), ou un signal de sortie provenant de ladite troisième porte ET (113c) pour le mode d'avance manuel (HDL), à une unité d'asservissement de la machine contrôlée par le système à commande numérique, en utilisant une porte OU (114).

2. Un procédé selon la revendication 1, dans lequel le facteur de modulation est normalement de 100 et le générateur d'impulsions manuel (102) forme 100 impulsions pour un tour complet de ce dernier, de sorte que le facteur de modulation est modifié d'un pourcentage équivalent à la fraction d'un tour complet qui est exécutée par le générateur d'impulsions manuel

3. Un procédé selon la revendication 1 ou 2, comprenant en outre une opération consistant à afficher le facteur de modulation modifié.

4. Le procédé selon une revendication précédente quelconque, comprenant en outre une opération consistant à afficher la vitesse d'avance commandée ainsi modifiée.

5. Le procédé selon une revendication précédente quelconque, comprenant en outre une opération consistant à afficher le facteur de modulation modifié lorsque le mode d'avance automatique (AUTO) est désigné, et la vitesse d'avance par à-coups modifiée lorsque le mode d'avance par à-coups (JOG) est désigné.

6. Appareil utilisable pour modifier manuellement une vitesse d'avance commandée d'une machine contrôlée par un système à commande numérique qui, en service, fournit à la machine des impulsions d'avance à une fréquence de répétition correspondant à la vitesse d'avance commandée dans un mode d'avance autre qu'un mode d'avance manuel (HDL), où on prévoit un mode d'avance automatique (AUTO) dans lequel la vitesse d'avance commandée est déterminée de manière automatique, et un mode d'avance par à-coups (JOG) dans lequel la vitesse d'avance commandée est déterminée à l'avance sous la forme d'une fréquence de répétition d'impulsions formés en maintenant vers le bas un bouton d'avance par à-coups, l'appareil comprenant :

un commutateur de sélection de mode (101) prévu pour désigner de manière sélective au moins le mode d'avance automatique (AUTO) de manière indépendante du mode d'avance manuel (HDL) et un générateur d'impulsions manuel (102) qui peut être actionné manuellement pour modifier la vitesse d'avance commandée pendant au moins le mode d'avance automatique (AUTO) en fournissant des impulsions (HFP) modifiant la vitesse d'avance commandée, le générateur d'impulsions manuel (102) étant un dispositif rotatif qui double le générateur d'impulsions manuel (102) utilisé pour actionner la machine dans le mode d'avance manuel (HDL) et qui forme des impulsions (HFP) dont le nombre dépend de l'angle de rotation du générateur d'impulsions manuel et d'une fréquence de répétition de formation dépendant de la vitesse de rotation du générateur d'impulsions manuel (102) ;

l'appareil étant caractérisé en ce que :

ledit commutateur de sélection de mode (101) est prévu pour désigner de manière sélective le mode d'avance par à-coups (JOG) indépendamment des autres modes d'avance ;

l'appareil comprend des moyens pour modifier à la fois la vitesse d'avance commandée quand le mode désigné est le mode d'avance automatique (AUTO) et la vitesse d'avance par à-coups quand le mode désigné est le mode d'avance par à-coups (JOG), comprenant à la fois un premier registre (104) pour mémoriser un facteur de modulation utilisé dans le mode automatique (AUTO) et un second registre (105) pour mémoriser un facteur de modulation utilisé dans le mode d'avance par à-coups (JOG), et des moyens (116a ou 116b) pouvant être actionnés pour changer le facteur de modulation mémorisé dans l'un ou l'autre registre (104 ou 105) selon le mode désigné par ledit commutateur de sélection de mode (101), le facteur de modulation mémorisé et, par conséquent, la vitesse d'avance commandée étant modifiés par lesdits moyens de changement (116a ou 116b) en fonction du nombre des impulsions (HFP) produites par le générateur d'impulsions manuel (102), et le générateur d'impulsions manuel (102) faisant varier le facteur de modulation ainsi mémorisé de telle manière que l'opérateur modifie la vitesse d'avance commandée ou la vitesse d'avance par à-coups d'un pourcentage qui est équivalent à la position de rotation qu'il donne au générateur d'impulsions manuel ;

ledit commutateur de sélection de mode (101) présente de première à troisième sorties correspondant respectivement au mode d'avance par à-coups (JOG), au mode d'avance automatique (AUTO) et au mode d'avance manuel (HDL) et pouvant être actionné pour fournir un signal à l'une quelconque desdites sorties correspondant au mode désigné (HFL AUTO JOG), lesdites sorties étant reliées aux premières entrées de première à troisième portes ET respectives (113a, 113b, 113c) ;

ledit générateur d'impulsions manuel (102) est couplé à un circuit de codage (115) pouvant fonctionner pour former des impulsions d'avance de manipulation (HFP) en réponse à des impulsions provenant dudit générateur d'impulsions manuel (102) et prévu pour fournir les impulsions d'avance de manipulation à de secondes entrées desdites portes ET (113a, 113b, 113c) ;

de premier et second compteurs agissant pour lesdits moyens de changement (116a, 116b) sont prévus, reliés aux sorties des première et seconde portes ET (113a, 113b), respectivement ;

lesdits second et premier registres (105, 104) sont reliés pour recevoir des signaux provenant respectivement des premier et second compteurs ;

un troisième registre (106) est prévu pour mémoriser une vitesse d'avance par à-coups commandée ;

un multiplicateur (107) est prévu pour recevoir des sorties provenant desdits second et troisième registres (105, 106) et pour former à partir de ces sorties un signal de vitesse d'avance par à-coups (Fgc) indicateur de leur produit ;

un multiplexeur de fréquence de répétition d'impulsions (108) est prévu pour recevoir un signal de facteur de modulation (Ra) provenant dudit premier registre (104) et un signal de vitesse d'avance commandée (Fa) appliqué extérieurement et pour former à partir de là, des impulsions d'une fréquence (Fc) sur la base du produit desdits signaux ;

un répartiteur d'impulsions (109) est prévu pour recevoir lesdites impulsions (Fc) provenant dudit multiplexeur de fréquence de répétition d'impulsions, et des données de distance appliquées extérieurement (ΔX, ΔY), et peut être actionné pour former, à partir de là, des impulsions réparties (DIP) pour le mode d'avance automatique (AUTO) ;

une unité de formation d'impulsions (110) est prévue pour recevoir ledit signal de vitesse d'avance par à-coups (Fgc) provenant dudit multiplicateur (107) et peut être actionné en réponse à un signal provenant dudit bouton d'avance par à-coups (103) pour former un signal pulsé (JP) d'une fréquence de répétition d'impulsions proportionnelle à la grandeur dudit signal de vitesse d'avance par à-coups (Fgc) provenant dudit multiplicateur (107), pour le mode d'avance par à-coups (JOG) ; et

une porte OU (114) est prévue pour transmettre lesdites impulsions réparties (DIP) pour le mode d'avance automatique (AUTO), ledit signal pulsé (JP) pour le mode d'avance par à-coups (JOG), ou un signal de sortie provenant de ladite porte ET (113c) pour le mode d'avance manuel (HDL), à une unité d'asservissement de la machine contrôlée par le système à commande numérique

7. L'appareil selon la revendication 6, dans lequel le facteur de modulation est normalement de 100 et le générateur d'impulsions manuel (102) forme 100 impulsions pour un tour complet de ce dernier, de sorte que le facteur de modulation est modifié d'un pourcentage équivalent à la fraction d'un tour complet qui est exécutée par le générateur d'inpulsions manuel.

8. L'appareil selon la revendication 6 ou 7, comprenant en outre des moyens d'affichage (112) pour afficher le facteur de modulation modifiée lorsque le mode d'avance automatique (AUTO) est désigné et la vitesse d'avance par à-coups modifiée lorsque le mode d'avance par à-coups (JOG) est désigné.

9. L'appareil selon la revendication 6 ou 7, comprenant en outre des moyens d'affichage (112) pour afficher le facteur de modulation modifié.

10. L'appareil selon la revendication 6, 7 ou 9, comprenant en outre des moyens d'affichage (112) pour afficher la vitesse d'avance commandée ainsi modifiée

11. L'appareil selon la revendication 8, 9 ou 10, comprenant en outre un multiplexeur (111), prévu pour recevoir ledit signal (Fgc) provenant dudit multiplicateur (107) et ledit facteur de modulation (Ra) provenant dudit premier registre (104) et pouvant être actionné pour fournir l'un ou l'autre signal à une unité d'affichage (112), de sorte que la vitesse d'avance par à-coups (Fgc) ou le facteur de modulation (Ra) est affiché sur l'unité d'affichage.

# Fig. 1

(A)          (B)

# Fig. 2

Fig. 3

CT

JOG
AUTO

101 Mode Selection Switch

JOG
AUTO
HDL

113a

116a

106 Register — Fg

107 Multiplier — Fgc

105 Register — Rg

111 Multiplexer

112 Display Unit

113b

104 Register — Ra

102

115 — HFP

113c

116b

110 Pulse Generating Unit — JP

103

108 Pulse Rate Multiplexer — Fc

Fa —

109 Pulse Distributor — DIP

Traveling Distance Data ΔX , ΔY

114

EP 0 091 245 B2